# FASCICULE DE BREVET EUROPEEN

(11) **EP 3 446 009 B1**
(45) Date de publication et mention de la délivrance du brevet: **22.01.2020**
(21) Numéro de dépôt: 17725298.8
(22) Date de dépôt: 20.04.2017
(51) Int. Cl.: F16K 11/07

(54) **VANNE DE CIRCUIT DE CARBURANT D'UN MOTEUR D'AÉRONEF**
VENTIL FÜR KRAFTSTOFFSYSTEM EINES FLUGZEUGMOTORS
VALVE FOR A FUEL CIRCUIT OF AN AIRCRAFT ENGINE

(30) Priorité: 21.04.2016 FR 1653519
(43) Date de publication de la demande: 27.02.2019
(73) Titulaire: Safran Aircraft Engines, 75015 Paris (FR)
(72) Inventeur: BERNARD, Clément, 77550 Moissy-Crayamel (FR); PORA, Loïc, 77550 Moissy-Crayamel (FR); CEBILLE, Christophe, 77550 Moissy-Crayamel (FR)
(74) Mandataire: Regimbeau
(86) Numéro de dépôt international: PCT/FR2017/050940
(87) Numéro de publication internationale: WO 2017/182759

(56) Documents cités:
- WO-A1-80/00870
- FR-A1- 2 300 275
- US-A- 3 198 212
- US-A- 4 066 239
- US-A1- 2014 026 546
- US-B1- 6 682 016

## Description

### DOMAINE TECHNIQUE GENERAL

La présente invention concerne le domaine des vannes pour circuit de carburant d'un moteur d'aéronef du type tiroir/ fourreau. Plus précisément, la présente invention concerne une vanne de circuit de carburant d'un moteur d'aéronef.

### ETAT DE L'ART

Le document US6682016B1 décrit une vanne pour circuit de carburant d'un moteur d'aéronef. La figure 1 illustre un autre exemple de vanne 1 pour circuit de carburant d'un moteur d'aéronef comprenant un fourreau 2 à l'intérieur duquel est ménagé un tiroir 3 s'étendant selon un axe longitudinal 4.

Le fourreau 2 comprend une première chambre 5 munie d'une entrée de carburant 6 et d'une deuxième chambre 7 munie d'une sortie de carburant 8, la première et la deuxième chambres 5, 7 étant reliées l'une à l'autre via un conduit 9. Le fourreau 2 comprend en outre deux chambres de commande (non représentées) permettant d'induire un déplacement du tiroir 3 selon l'axe longitudinal 4 en fonction d'un différentiel de pression entre ces deux chambres.

Le tiroir 3 comprend une première partie 10 cylindrique s'étendant dans la première chambre 5, une deuxième partie 11 cylindrique s'étendant dans la deuxième chambre 7 et une troisième partie 12 reliant les première et deuxième parties 10, 11 et au niveau de laquelle la section transversale du tiroir 3 est rétrécie. Le tiroir 3 se déplace selon l'axe longitudinal 4 sous l'effet d'un différentiel de pression entre les deux chambres de commande, entre une position de fermeture dans laquelle la première partie 10 du tiroir 3 obstrue le conduit 9 de sorte à empêcher l'écoulement de carburant depuis l'entrée de carburant 6 vers la sortie de carburant 8, et une position d'ouverture dans laquelle la première partie 10 du tiroir 3 libère le conduit 9 de sorte à autoriser l'écoulement de carburant depuis l'entrée de carburant 6 vers la sortie de carburant 8.

Or, avec une telle vanne 1, dans la position d'ouverture, l'écoulement de carburant n'a pas la même quantité de mouvement entre l'entrée de carburant 6 et la sortie de carburant 8. En effet, la différence de section transversale entre la première partie 10 et la troisième partie 12 génère, en position d'ouverture, un jet de carburant qui vient appliquer un effort supplémentaire sur le tiroir 3. Cet effort supplémentaire, aussi appelé « force de jet », est particulièrement problématique car il comporte une composante axiale qui vient perturber le pilotage du tiroir 3 par le différentiel de pression. On comprendra en effet que tout effort axial supplémentaire s'appliquant sur le tiroir 3 entraîne une erreur dans le positionnement du tiroir 3 et génère de ce fait des imprécisions quant au débit de carburant en sortie de la deuxième chambre 7. La force de jet est donc préjudiciable au bon fonctionnement du circuit de carburant.

Pour éviter de telles imprécisions, il est par exemple connu du document WO 80/00870 de ménager dans le tiroir une ou plusieurs rainures s'étendant longitudinalement, présentant un profil longitudinal arrondi et dont le rayon de courbure est déterminé de sorte que le jet de carburant entre et sorte de la rainure en formant avec l'axe longitudinal un même angle d'environ 69°. Cela permet de réduire les effets de la force de jet sur le tiroir. Cette réduction n'est néanmoins pas suffisante pour assurer la précision requise pour un bon fonctionnement du circuit de carburant.

Il existe donc un besoin de limiter davantage les effets des forces de jet sur les tiroirs de circuit de carburant de moteur d'aéronef.

### PRESENTATION DE L'INVENTION

La présente invention répond à ce problème en proposant un tiroir pour vanne de circuit de carburant d'un moteur d'aéronef qui comprend un épaulement dans lequel est ménagée une rainure formant une zone de recirculation de carburant, assurant ainsi une arrivée du jet de carburant généré par ledit épaulement sur une portion cylindrique du tiroir, et évitant de ce fait la génération d'un effort axial qui tendrait à le déplacer axialement.

Plus précisément, la présente invention a pour objet une vanne pour circuit de carburant d'un moteur d'aéronef selon la revendication 1.

L'épaulement est muni d'une marche qui est une protubérance s'étendant à partir de ladite rainure, de sorte à accélérer la recirculation du carburant dans la zone de recirculation.

Cet épaulement s'étend en saillie par rapport audit épaulement, dans le prolongement de la surface cylindrique de la première partie d'extrémité qui, lorsque du carburant s'écoule le long de la première partie d'extrémité en direction de la partie intermédiaire rétrécie et de la deuxième partie d'extrémité, assure la génération d'un jet de carburant sur la portion cylindrique de la partie intermédiaire rétrécie, une recirculation de carburant se formant dans une zone devant ledit épaulement.

Selon un mode de réalisation, notamment la marche s'étend sensiblement perpendiculairement depuis la surface de l'épaulement.

Préférentiellement, la rainure se prolonge longitudinalement depuis l'épaulement sur la portion cylindrique de la partie intermédiaire rétrécie et la rainure présente, au niveau de ladite portion cylindrique, un fond globalement plan, le jet de carburant généré par la rainure atteignant ladite portion cylindrique au niveau du fond de ladite rainure.

Préférentiellement, la rainure est munie d'une marche s'étendant dans le prolongement de la surface cylindrique de la première partie, de sorte à accélérer la recirculation du carburant dans la zone de recirculation.

Dans un mode de réalisation, cette marche s'étend sensiblement perpendiculairement depuis la surface de l'épaulement.

L'invention a également pour objet un circuit de carburant d'une turbomachine d'aéronef comprenant une vanne telle que précédemment décrite.

L'invention a également pour objet un ensemble comportant une turbomachine d'aéronef et un tel circuit, ainsi qu'un aéronef comprenant une turbomachine reliée à un tel circuit de carburant.

### PRESENTATION DES FIGURES

D'autres caractéristiques, buts et avantages de la présente invention apparaitront à la lecture de la description détaillée qui va suivre, et en regard des dessins annexés donnés à titre d'exemples non limitatif et sur lesquels :

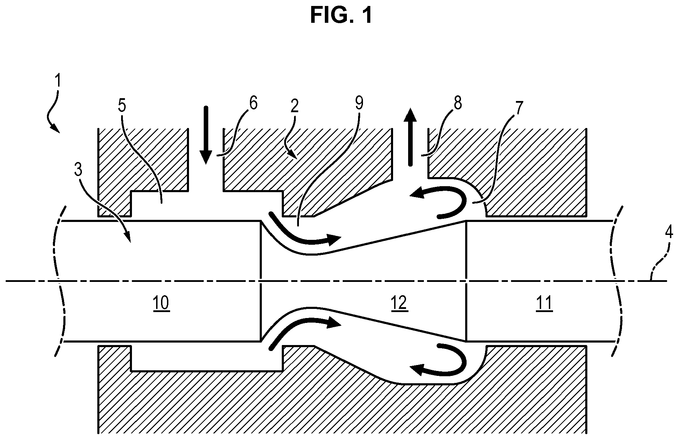

- la figure 1 représente une vue schématique, en coupe longitudinale, d'une vanne pour circuit de carburant d'un moteur d'aéronef du type tiroir/fourreau selon l'art antérieur,
- la figure 2 représente une vue schématique partielle, en coupe longitudinale, d'une vanne pour circuit de carburant d'un moteur d'aéronef du type tiroir/fourreau selon un mode de réalisation de l'invention,
- la figure 2a représente une vue de détail de la vanne illustrée à la figure 2,
- la figure 3 représente une vue en perspective du tiroir de la vanne illustrée à la figure 2, et
- la figure 4 représente une vue de face du tiroir illustré à la figure 3.

### DESCRIPTION DETAILLEE

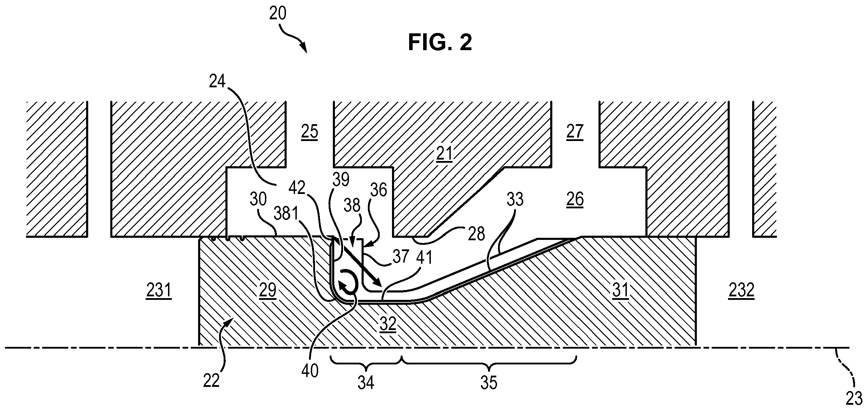

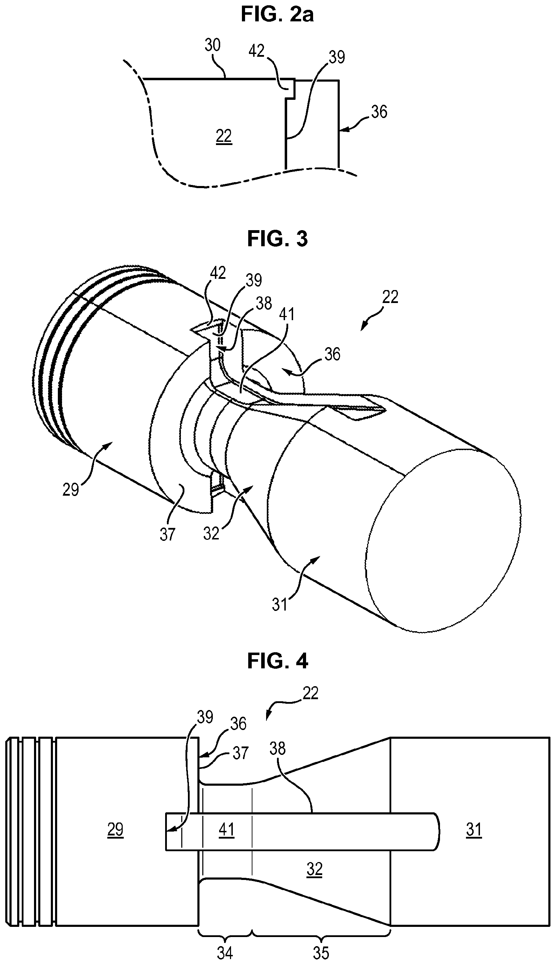

La figure 2 illustre un exemple de vanne 20 pour circuit de carburant d'un moteur d'aéronef. La vanne 20 comprend en particulier un fourreau 21, à l'intérieur duquel est ménagé un tiroir 22 s'étendant selon un axe longitudinal 23.

Le fourreau 21 comprend deux chambres de commande 231, 232 permettant d'induire un déplacement du tiroir 22 selon l'axe longitudinal 23 en fonction d'un différentiel de pression entre ces deux chambres. Le fourreau 21 comprend en outre une chambre intermédiaire formée d'une première chambre 24 munie d'une entrée de carburant 25 et d'une deuxième chambre 26 munie d'une sortie de carburant 27, la première et la deuxième chambres 24, 26 étant reliées l'une à l'autre via un conduit 28.

Le tiroir 22 s'étend entre les deux chambres de commande 231, 232, dans la chambre intermédiaire.

Le tiroir 22 comprend une partie intermédiaire rétrécie 32 s'étendant entre deux parties cylindriques d'extrémité 29, 31, une première partie d'extrémité 29 étant séparée de la partie intermédiaire rétrécie 32 par un épaulement 36 présentant une surface 37 agencée globalement perpendiculairement par rapport à l'axe longitudinal 23. La partie intermédiaire rétrécie 32 comporte, dans le prolongement de l'épaulement 36, au moins une portion cylindrique 34. La partie intermédiaire rétrécie 32 peut en outre comporter une portion tronconique 35 reliant la portion cylindrique 34 à la deuxième partie d'extrémité 31 du tiroir 22.

Le tiroir 22 se déplace selon l'axe longitudinal 23 sous l'effet du différentiel de pression entre les deux chambres de commande 231, 232, entre une position de fermeture dans laquelle la première partie d'extrémité 29 du tiroir 22 obstrue le conduit 28 de sorte à empêcher l'écoulement de carburant depuis l'entrée de carburant 25 vers la sortie de carburant 27, et une position d'ouverture dans laquelle la première partie d'extrémité 29 du tiroir 22 libère le conduit 28 de sorte à autoriser l'écoulement de carburant depuis l'entrée de carburant 25 vers la sortie de carburant 27. En position d'ouverture, le changement brutal de section entre la première partie d'extrémité 29 et la partie intermédiaire rétrécie 32 entraîne la génération d'un jet de carburant sur la partie intermédiaire rétrécie 32.

L'épaulement 36 comprend au moins une rainure 38 qui s'étend radialement depuis la surface cylindrique 30 de la première partie d'extrémité 29, en direction de l'axe longitudinal 23, jusqu'à la portion cylindrique 34. La rainure 38 assure une recirculation du carburant devant l'épaulement (zone de recirculation 40) et ainsi la génération d'un jet de carburant sur la portion cylindrique 34 de la partie intermédiaire rétrécie 32, lorsque du carburant s'écoule le long de la première partie d'extrémité 29 en direction de la partie intermédiaire rétrécie 32 et de la deuxième partie d'extrémité 31. La rainure 38 permet de réduire l'effet de la pression du carburant sur le tiroir 22.

L'épaulement 36 est muni d'une marche 42 s'étendant dans le prolongement de la surface cylindrique 30 de la première partie d'extrémité 29.

La marche 42 est représentée plus en détail sur la figure 2a.

Cette marche 42 est une protubérance en saillie par rapport à l'épaulement 36 Elle s'étend à partir de la rainure 38 et est agencée de préférence sur toute la largeur de ladite rainure 38. Elle assure une recirculation du carburant devant l'épaulement (zone de recirculation 40) et ainsi la génération d'un jet de carburant sur la portion cylindrique 34 de la partie intermédiaire rétrécie 32, lorsque du carburant s'écoule le long de la première partie d'extrémité 29 en direction de la partie intermédiaire rétrécie 32 et de la deuxième partie d'extrémité 31. La marche 42 permet de réduire l'effet de la pression du carburant sur le tiroir 22. La marche 42 est représentée plus en détail sur la figure 2a.

La marche 42 s'étend depuis l'épaulement 36 sensiblement parallèlement à l'axe longitudinal 23. Autrement dit, la marche 42 est agencée sensiblement perpendiculairement à l'épaulement 36 et à la surface 37 radiale définissant celui-ci. On entend par « sensiblement parallèlement » ou « sensiblement perpendiculairement », parallèle ou perpendiculaire aux erreurs près, c'est-à-dire à 10° près.La rainure 38 comprend une surface 39 disposée globalement perpendiculairement à l'axe longitudinal 23, en retrait de la surface 37 de l'épaulement 36 par rapport à la deuxième partie d'extrémité 31.

La zone de recirculation 40 de carburant ainsi formée est positionnée sous le jet de carburant, c'est-à-dire entre le jet de carburant et le tiroir 22. Les tourbillons de carburant générés au niveau de la zone de recirculation 40 de carburant permettent de limiter l'angle avec lequel le jet de carburant arrive sur la partie intermédiaire rétrécie 32, et ainsi de s'assurer que le jet de carburant arrive sur la portion cylindrique 34 et non sur la portion tronconique 35 de la partie intermédiaire rétrécie 32. De plus, la recirculation de carburant permet de réduire l'effet de la pression du carburant sur le tiroir 22.

On comprendra qu'en raison de la forme cylindrique de la portion cylindrique 34, le jet de carburant n'applique sur la portion cylindrique 34 aucun effort axial tendant à déplacer longitudinalement le tiroir 22, et que dans ce cas la seule composante axiale appliquée sur le tiroir 22 correspond à des forces de frottement du carburant. Ces forces de frottement étant négligeables, la force de jet est ainsi considérablement limitée. Au contraire, sans la rainure 38 et sans la zone de recirculation 40, le jet de carburant risquerait d'atteindre la portion tronconique 35 de la partie intermédiaire rétrécie 33, générant de ce fait un effort axial perturbant le positionnement du tiroir 22. Par ailleurs, contrairement à l'état de la technique qui tendait à compenser l'écart de quantité de mouvement entre l'entrée et la sortie de la vanne, la présente invention tend à ne générer aucun écart de quantité de mouvement entre l'entrée et la sortie 25, 27 de la vanne 20.

En accélérant la recirculation de carburant dans la zone de recirculation 40, l'effort généré par la pression du carburant dans la zone de recirculation 40 sur la surface 39 de la rainure 38 est limité. Il est ainsi possible de réduire d'autant plus l'effort axial généré sur le tiroir 22 et notamment de compenser les forces de frottement générées par l'écoulement du carburant sur le tiroir 22.

De préférence, la rainure 38 se prolonge longitudinalement depuis l'épaulement 36 sur la portion cylindrique 34 de la partie intermédiaire rétrécie 32. La rainure 38 a pour effet d'éviter les turbulences dans le flux de carburant, lorsque la vanne 20 est en position d'ouverture, et ainsi limiter les phénomènes de battement de tiroir.

La rainure 38 présente, au niveau de la portion cylindrique 34, un fond 41 globalement plan, le jet de carburant généré par la rainure 38 atteignant ladite portion cylindrique au niveau du fond 41 de ladite rainure 38.

Le tiroir 22 comprend par exemple deux rainures 38 ménagées diamétralement l'une par rapport à l'autre.

La rainure 38 présente en outre un congé de raccordement 381 entre la surface 39 de la rainure 38 et le fond 41 de ladite rainure 38 configurée pour entretenir la recirculation du carburant dans la zone de recirculation 40. Pour cela, le congé de raccordement 381 est dimensionné de sorte à entretenir la recirculation du carburant dans la zone de recirculation 40. Le congé de raccordement 381 facilite la mise en mouvement du carburant au niveau de la zone de recirculation 40 et donc la recirculation du carburant dans ladite zone de recirculation 40.

La vanne 20 et plus spécifiquement le tiroir 22 présentent l'avantage de réduire les forces de jet qui s'appliquent sur le tiroir 22 en formant une zone de recirculation 40 de carburant au moyen de la rainure 38 et en s'assurant que le jet de carburant généré par l'épaulement 36 arrive sur la portion globalement cylindrique 34 du tiroir 22. La vanne permet donc d'éviter que l'écoulement du carburant applique un effort axial sur le tiroir 22.

## Revendications

1. Vanne (20) pour circuit de carburant d'un moteur d'aéronef, comprenant un fourreau (21) à l'intérieur duquel est ménagé un tiroir (22), ledit fourreau (21) comprenant deux chambres de commande (231, 232) entre lesquelles s'étend le tiroir (22), ledit tiroir (22) s'étendant selon un axe longitudinal (23) et comprenant une partie intermédiaire rétrécie (32) s'étendant entre deux parties cylindriques d'extrémité (29, 31), une première partie d'extrémité (29) étant séparée de la partie intermédiaire rétrécie (32) par un épaulement (36) présentant une surface (37) agencée globalement perpendiculairement à l'axe longitudinal (23), la partie intermédiaire rétrécie comportant elle-même, dans le prolongement de l'épaulement (36), au moins une portion cylindrique (34), ledit fourreau (21) comprenant une chambre intermédiaire munie d'une entrée de carburant (25) et d'une sortie de carburant (27) dans laquelle s'étendent les première et deuxième parties d'extrémité (29, 31) et la partie intermédiaire rétrécie (32) du tiroir (22), le tiroir (22) étant configuré pour se déplacer relativement au fourreau (21) sous l'effet d'une différence de pression entre les deux chambres de commande (231, 232), **caractérisée en ce que** le tiroir (22) est déplacé entre une position de fermeture dans laquelle le tiroir (22) obstrue l'entrée de carburant (25), et une position d'ouverture dans laquelle le tiroir libère l'entrée de carburant (25), et **en ce que** l'épaulement (36) comprend au moins une rainure (38) qui s'étend radialement depuis la surface cylindrique (30) de la première partie d'extrémité (29), en direction de l'axe longitudinal (23), jusqu'à la portion cylindrique (34) de la partie intermédiaire rétrécie (32) et qui forme une zone de recirculation (40) de carburant qui assure, lorsque du carburant s'écoule le long de la première partie d'extrémité (29) en direction de la partie intermédiaire rétrécie (32) et de la deuxième partie d'extrémité (31), que le jet de carburant généré arrive sur ladite portion cylindrique (34).

2. Vanne (20) pour circuit de carburant d'un moteur d'aéronef selon la revendication 1, dans lequel la rainure (38) se prolonge longitudinalement depuis l'épaulement (36) sur la portion cylindrique (34) de la partie intermédiaire rétrécie (32) et dans lequel la rainure (38) présente, au niveau de ladite portion cylindrique, un fond (41) globalement plan, le jet de carburant généré par la rainure (38) atteignant ladite portion cylindrique au niveau du fond (41) de ladite rainure (38).

3. Vanne (20) pour circuit de carburant d'un moteur d'aéronef selon la revendication 1 ou la revendication 2, dans lequel la rainure (38) est munie d'une marche (42) s'étendant dans le prolongement de la surface cylindrique (30) de la première partie (29), de sorte à accélérer la recirculation du carburant dans la zone de recirculation (40).

4. Vanne (20) pour circuit de carburant d'un moteur d'aéronef selon la revendication 3, dans lequel la marche (42) s'étend sensiblement perpendiculairement depuis la surface (37) de l'épaulement (36).

5. Circuit de carburant de turbomachine d'aéronef comprenant une vanne (20) selon l'une des revendications 1 à 4.

6. Ensemble comportant une turbomachine d'aéronef et un circuit de carburant selon la revendication 5.

7. Aéronef comprenant une turbomachine reliée à un circuit de carburant selon la revendication 5.

## Patentansprüche

1. Ventil (20) für einen Brennstoffkreislauf eines Flugzeugtriebwerks, umfassend eine Hülle (21) im Inneren derer ein Schieber (22) vorgesehen ist, wobei die Hülle (21) zwei Steuerkammern (231, 232) umfasst, zwischen denen sich der Schieber (22) erstreckt, wobei sich der Schieber (22) entlang einer Längsachse (23) erstreckt und einen verengten Zwischenteil (32) umfasst, der sich zwischen zwei zylindrischen Endteilen (29, 31) erstreckt, wobei ein erster Endteil (29) von dem verengten Zwischenteil (32) durch einen Absatz (36) getrennt ist, der eine Oberfläche (37) aufweist, die im Allgemeinen senkrecht zu der Längsachse (23) angeordnet ist, wobei der verengte Zwischenteil selbst in der Verlängerung des Absatzes (36) mindestens einen zylindrischen Abschnitt (34) beinhaltet, wobei die Hülle (21) eine Zwischenkammer umfasst, die mit einem Brennstoffeingang (25) und einem Brennstoffausgang (27) versehen ist, in dem sich der erste und zweite zylindrische Endteil (29, 31) und der verengte Zwischenteil (32) des Schiebers (22) erstrecken, wobei der Schieber (22) konfiguriert ist, um sich relativ zu der Hülle (21) unter der Wirkung eines Druckunterschieds zwischen den beiden Steuerkammern (231, 232) zu verschieben, **dadurch gekennzeichnet, dass** der Schieber (22) zwischen einer Schließposition, in der der Schieber (22) den Brennstoffeingang (25) versperrt, und einer Öffnungsposition verschoben wird, in der der Schieber den Brennstoffeingang (25) freigibt, und dadurch, dass der Absatz (36) mindestens eine Einkerbung (38) umfasst, die sich radial aus der zylindrischen Oberfläche (30) des ersten Endteils (29) in Richtung der Längsachse (23) bis zum zylindrischen Abschnitt (34) des verengten Zwischenteils (32) erstreckt, und die eine Brennstoffumwälzzone (40) bildet, die, wenn der Brennstoff entlang des ersten Endteils (29) in Richtung des verengten Zwischenteils (32) und des zweiten Endteils (31) strömt, dafür sorgt, dass der erzeugte Brennstoffstrahl in dem zylindrischen Abschnitt (34) ankommt.

2. Ventil (20) für einen Brennstoffkreislauf eines Flugzeugtriebwerks nach Anspruch 1, wobei sich die Einkerbung (38) längs aus dem Absatz (36) über den zylindrischen Abschnitt (34) des verengten Zwischenteils (32) fortsetzt und wobei die Einkerbung (38) im Bereich des zylindrischen Abschnitts einen im Wesentlichen ebenen Boden (41) aufweist, wobei der durch die Einkerbung (38) erzeugte Brennstoffstrahl den zylindrischen Abschnitt im Bereich des Bodens (41) der Einkerbung (38) erreicht.

3. Ventil (20) für einen Brennstoffkreislauf eines Flugzeugtriebwerks nach Anspruch 1 oder Anspruch 2, wobei die Einkerbung (38) mit einer Stufe (42) versehen ist, die sich in der Fortsetzung der zylindrischen Oberfläche (30) des ersten Teils (29) derart erstreckt, um die Umwälzung des Brennstoffs in der Umwälzzone (40) zu beschleunigen.

4. Ventil (20) für einen Brennstoffkreislauf eines Flugzeugtriebwerks nach Anspruch 3, wobei sich die Stufe (42) im Wesentlichen senkrecht aus der Oberfläche (37) des Absatzes (36) erstreckt.

5. Brennstoffkreislauf einer Flugzeugturbomaschine, umfassend ein Ventil (20) nach einem der Ansprüche 1 bis 4.

6. Einheit, eine Flugzeugturbomaschine und einen Brennstoffkreislauf nach Anspruch 5 beinhaltend.

7. Flugzeug, umfassen eine Turbomaschine, die mit einem Brennstoffkreislauf nach Anspruch 5 verbunden ist.

## Claims

1. Valve (20) for an aircraft engine fuel circuit, comprising a sleeve (21) in the interior of which is provided a spool (22), said sleeve (21) comprising two control chambers (231, 232) between which the spool (22) extends, said spool (22) extending along a longitudinal axis (23) and comprising a narrowed intermediate portion (32) extending between two cylindrical end portions (29, 31), a first end portion (29) being separated from the narrowed intermediate portion (32) by a shoulder (36) having a surface (37) arranged perpendicular to the longitudinal axis (23) overall, the narrowed intermediate portion itself including, as an extension of the shoulder (36), at least one cylindrical section (34), said sleeve (21) comprising an intermediate chamber provided with a fuel inlet (25) and a fuel outlet (27) in which the first and second end portions (29, 31) and the narrowed intermediate portion (32) of the spool (22) extend, the spool (22) being configured to be displaced relative to the sleeve (21) under the influence of a pressure difference between the two control chambers (231, 232), **characterized in that** the spool (22) is displaced between a closed position in which the spool (22) blocks the fuel inlet (25), and an open position in which the spool frees the fuel inlet (25), and **in that** the shoulder (36) comprises at least one groove (38) which extends radially from the cylindrical surface (30) of the first end portion (29), in the direction of the longitudinal axis (23), until the cylindrical section (34) of the narrowed intermediate portion (32) and which forms a fuel recirculation zone (40) which ensures, when fuel flows along the first end portion (29) in the direction of the narrowed intermediate portion (32) and of the second end portion (31), that the fuel jet generated arrives on said cylindrical section (34).

2. Valve (20) for an aircraft engine fuel circuit according to claim 1, wherein the groove (38) extends longitudinally from the shoulder (36) on the cylindrical section (34) of the narrowed intermediate portion (32) and wherein the groove (38) has, at said cylindrical portion, a flat bottom (41) overall, the fuel jet generated by the groove (38) reaching said cylindrical portion at the bottom (41) of said groove (38).

3. Valve (20) for an aircraft engine fuel circuit according to claim 1 or claim 2, wherein the groove (38) is provided with a step (42) extending as an extension of the cylindrical surface (30) of the first portion (29), so as to accelerate the recirculation of the fuel in the recirculation zone (40).

4. Valve (20) for an aircraft engine fuel circuit according to claim 3, wherein the step (42) extends substantially perpendicularly from the surface (37) of the shoulder (36).

5. Aircraft engine fuel circuit comprising a valve (20) according to one of claims 1 to 4.

6. Assembly including an aircraft turbomachine and a fuel circuit according to claim 5.

7. Aircraft comprising a turbomachine connected to a fuel circuit according to claim 5.
